(19)

Europäisches
Patentamt
European
Patent Office
Office européen
des brevets

(11) **EP 4 617 862 A1**

(12) **EUROPEAN PATENT APPLICATION**

(43) Date of publication:
**17.09.2025 Bulletin 2025/38**

(21) Application number: **25155912.6**

(22) Date of filing: **05.02.2025**

(51) International Patent Classification (IPC):
**G06F 9/30** (2018.01)     **G06F 7/60** (2006.01)

(52) Cooperative Patent Classification (CPC):
**G06F 9/30014; G06F 7/483; G06F 7/556;**
**G06F 9/30101; G06F 9/30145; G06F 9/30189**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **14.03.2024 IN 202441018413**

(71) Applicant: **NXP B.V.**
**5656 AG Eindhoven (NL)**

(72) Inventors:
• **MIGLANI, Sachin**
**5656AG Eindhoven (NL)**
• **ROY, Sourav**
**5656AG Eindhoven (NL)**
• **SCOTT, Jeffrey William**
**5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **EFFICIENT IMPLEMENTATION OF A FLOATING-POINT EXPONENTIAL FUNCTION IN A PROCESSOR**

(57)     A processor including an instruction decoder configured to provide at least floating-point instruction control signals, a floating-point computational data path, a floating-point custom instruction control logic block coupled to the floating-point computational data path, a control and status register coupled to the floating-point computational data path, and the floating-point custom instruction control logic block, a first multiplexor configured to provide either floating-point instruction control signals or custom instruction control signals to the floating-point computational data path based on the state of a select control signal, and a second multiplexor configured to provide either floating-point operands or custom operands to the floating-point computational data path based on the state of the select control signal. The float-ing-point custom instruction control logic block asserts the select signal while directing the floating-point com-putational data path to assist it with the execution of a custom instruction. The custom instruction may be a floating-point exponential function.

FIG. 7

**Description**

**FIELD OF THE DISCLOSURE**

Various illustrative embodiments disclosed herein relate to processor micro architecture for hardware support of floating-point instruction execution for exponential computations.

**BACKGROUND**

Transcendental functions are functions not expressible as a finite combination of the algebraic operations of addition, subtraction, multiplication, division, raising to a power, and extracting a root. Examples of transcendental functions include *log* x, *sin* x, *cos* x, $e^{\wedge}x$, and functions containing any of the foregoing.
Transcendental functions, such as the exponential function ($e^{\wedge}x$) are used for non-linear arithmetic operations performed by processors. It is desirable to have processors that efficiently implement the capability to perform exponential computations.

**SUMMARY**

A summary of various illustrative embodiments is presented below.
Various illustrative embodiments relate to electronic products such as processors with floating point units. In one illustrative embodiment, a processor includes a floating-point unit including a floating-point computational data path, a floating-point computational data path control logic block coupled to the floating-point computational data path, a floating-point custom instruction control logic block coupled to the floating-point computational data path, and a control and status register coupled to the floating-point computational data path, the floating-point computational data path control logic block, and the floating-point custom instruction control logic block.
In some embodiments, the processor further includes an instruction decode unit configured to generate floating-point instruction control signals based, at least in part, on a first set of floating-point instructions, and further configured to generate a start signal that activates execution of a floating-point custom instruction.
In some embodiments, the floating-point computational data path in combination with the floating-point computational data path control logic block are configured to execute a first set of floating-point instructions.
In some embodiments, the floating-point computational data path in combination with the floating-point computational data path control logic block, and the floating-point custom instruction control logic block are configured to execute a first set of floating-point instructions and at least one custom instruction.
In some embodiments, the first set of floating-point instructions are floating-point instructions specified by the RISC-V instruction set architecture.
In another illustrative embodiment, a processor includes an instruction decoder configured to provide at least floating-point instruction control signals, a floating-point computational data path, a control and status register coupled to the floating-point computational data path, and the floating-point custom instruction control logic block, a first multiplexor configured to provide either floating-point instruction control signals or custom instruction control signals to the floating-point computational data path based on the state of a select control signal, and a second multiplexor configured to provide either floating-point operands or custom operands to the floating-point computational data path based on the state of the select control signal.
In some embodiments, the processor further includes a third multiplexor configured to provide either first rounding control information or custom rounding control information to the floating-point computational data path based on the state of the select control signal.
In some embodiments, the third multiplexor is coupled to receive the first rounding control information from a control and status register, and is further coupled to receive the custom rounding control information from the floating-point custom instruction control logic block.
In some embodiments, the floating-point custom instruction control logic block includes at least one look-up table.
In some embodiments, the processor further includes an instruction output data bus driver that is coupled to receive instruction output results from the floating-point computational data path while the select signal is deasserted.
In some embodiments, the instruction decoder is configured to determine whether a custom instruction has been received.
In some embodiments, the instruction decoder is configured to assert a start signal responsive to the determination that a custom instruction has been received.
In some embodiments, the floating-point custom instruction control logic block is configured to initiate, responsive to the start signal, a sequence of actions by both the floating-point custom control logic block and by the floating-point computational data path.

In some embodiments, the instruction decoder is configured to determine whether a floating-point exponent instruction has been received.

In some embodiments, the floating-point custom instruction control logic is configured to control the execution of a floating-point exponent instruction.

In a further illustrative embodiment, a method includes asserting, by an instruction decoder, a start signal responsive to decoding a floating-point custom instruction, initiating, by a floating-point custom instruction control logic block, responsive to the start signal, a sequence of actions by both the floating-point custom instruction control logic block and a floating-point computational data path, asserting a select control signal by the floating-point custom instruction control logic block, selecting, responsive to the select control signal, custom instruction control signals, and providing the custom instruction control signals to the floating-point computational data path, and selecting, responsive to the select control signal, custom instruction operands and providing the custom instruction operands to the floating-point computational data path.

In some embodiments, the method further includes accessing, by the custom instruction control logic block, one or more look-up tables.

In some embodiments, the method further includes selecting, responsive to the select control signal, custom rounding control information and providing the custom rounding control information to the floating-point computational data path.

In some embodiments, the method further includes inhibiting write back of instruction execution results while the select signal is asserted.

In some embodiments, the method further includes deasserting the select control signal subsequent to execution of the custom floating-point instruction.

## BRIEF DESCRIPTION OF DRAWINGS

To facilitate a better understanding of various illustrative embodiments, reference is made to the accompanying drawings, wherein:

FIG. 1 is a high-level block diagram of a portion of a processor having a floating-point unit integrated therein.

FIG. 2 illustrates a format for representing a 32-bit single-precision floating-point number in accordance with the IEEE 754-2008 standard.

FIG. 3 illustrates a format for encoding a 32-bit single-precision floating-point computational instruction in accordance with the "F" extension of the RISC-V instruction set architecture.

FIG. 4 is a simplified high-level block diagram of a portion of a floating-point unit for executing floating-instructions.

FIG. 5 is a simplified high-level block diagram of a portion of a floating-point unit for executing floating-instructions in of the RISC-V "F" extension, and for executing a custom floating-point exponent function instruction in accordance with this disclosure.

FIG. 6 is a high-level block diagram of a portion of a floating-point unit for executing floating-instructions in accordance with the "F" extension of the RISC-V instruction set architecture.

FIG. 7 is a high-level block diagram of a portion of a floating-point unit for executing floating-instructions of the RISC-V "F" extension, with the addition of logic for executing a custom floating-point exponent function instruction in accordance with this disclosure.

FIG. 8 is a diagram showing the order in which "F" extension floating-point instructions are executed under the direction of a custom instruction control logic block in combination the computational functions of the custom instruction control logic block to perform a function that is allowed but not supported by the RISC-V ISA, in accordance with this disclosure.

FIG. 9 is a flow diagram of a method in accordance with this disclosure.

To facilitate understanding, identical reference numerals have been used in some places to designate elements having substantially the same or similar structure and/or substantially the same or similar function.

## DETAILED DESCRIPTION

Many real-world problems require computations with transcendental functions in order to find solutions. In some instances, processors, such as but not limited to, microprocessors, have been implemented with specialized hardware to support computations with transcendental functions. Other processors, such as those compliant with the RISC-V instruction set architecture, do not provide specific hardware support for computing floating-point transcendental functions in either the RISC-V base or extended instruction sets. However, the RISC-V instruction set architecture allows processor designers to add custom instructions that are visible to the programmer, i.e., the custom instructions become part of the instruction set architecture. However, the hardware design that underlies the custom instructions is not specified by the RISC-V instruction set architecture, and it is up the processor designer to develop a hardware design, or microarchitecture, to support the functionality of the custom instructions.

Various embodiments in accordance with this disclosure provide apparatus and methods for computing, at least an estimate, of an exponential function (e.g., $e^x$). Some embodiments in accordance with this disclosure provide an efficient implementation of processor hardware for executing floating-point exponential instructions.

Computations involving the exponential function $e^x$ (where e is the base of the natural logarithms) may be carried out using a computational resource such as, but not limited to, a computer. Further, these computations may be carried out by executing various floating-point instructions. Computers often include specialized hardware within their processors for executing floating-point instructions, and such specialized hardware may be organized as a floating-point unit (FPU). That is, an FPU is specialized hardware that is designed to perform arithmetic operations on floating-point numbers.

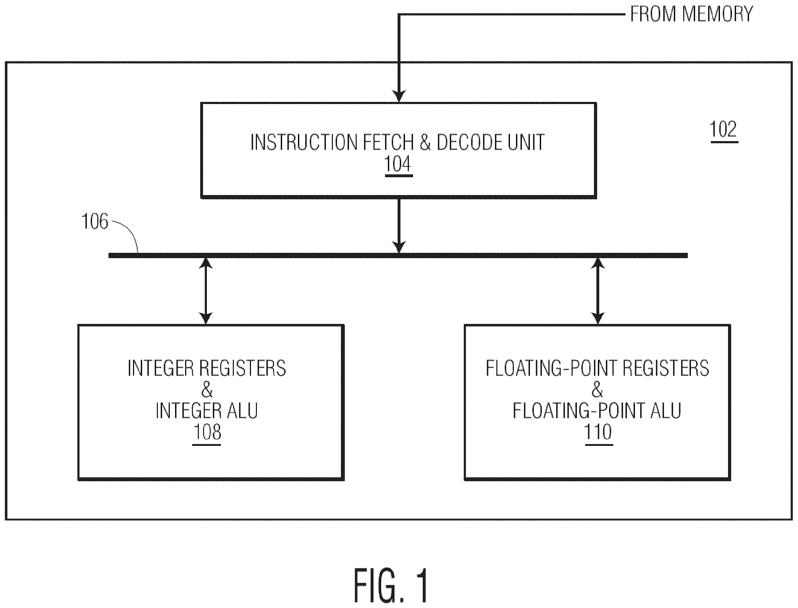

FIG. 1 is a high-level block diagram of a portion of a simplified example processor **102** that has an integrated FPU. Processor **102** includes an instruction fetch and decode unit **104,** a bus **106,** an integer unit **108,** which includes a set of integer registers and an integer arithmetic logic unit (ALU)), and an FPU **110,** which includes floating-point registers and a floating-point ALU. Those skilled in the art will recognize that, unlike the portion of the example processor shown in FIG. 1, actual processors may have many other functional blocks and features. FIG. 1 illustrates a scenario in which a processor is configured to receive and decode instructions, and then direct either integer unit **108** or FPU **110** to perform the desired operation as specified by a decoded instruction.

Floating-point numbers are a way to represent real numbers in computing, including both rational and irrational numbers, with a fractional part. Compared to integers, which represent whole numbers, floating-point numbers allow for the representation of a wider range of values, such as very small and very large numbers. Generally, a floating-point number has three parts, i.e., a sign, a fraction, and an exponent. The sign indicates whether the floating-point number is positive or negative. The fraction, which may also be referred to as a mantissa or a significand, provides the significant digits of the floating-point number, including the fractional part. The exponent represents the power to which the base of the floating-point number is raised. In other words, the general form of a floating-point number is:

$\pm$Fraction $\times$ Base$^{\text{Exponent}}$.

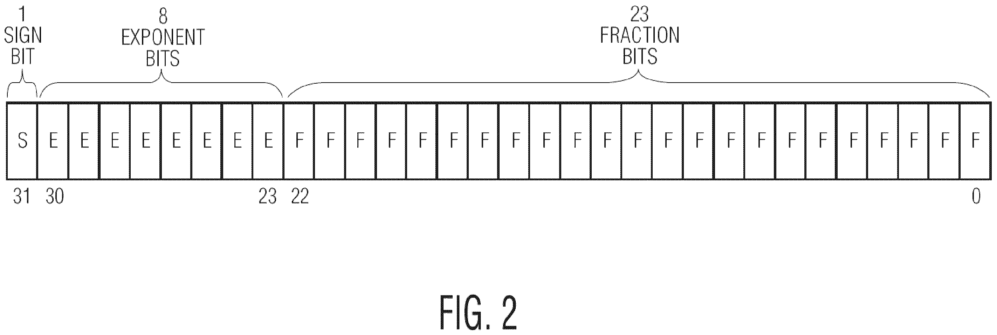

Although there are many ways that a floating-point number can be represented in a computer system, one of those ways is in accordance with the IEEE 754-2008 specification. FIG. 2 illustrates the format of a 32-bit single-precision floating-point number in accordance with the IEEE 754-2008 specification. In this representation of 32-bit single-precision floating-point numbers, as shown in FIG. 2, bits 0 to 22 represent the 23 bits of fraction data, bits 23 to 30 represent the 8 bits of exponent data, and bit 31 represents the one bit that indicates the sign of the floating-point number, i.e., whether it is positive or negative.

In the field of computer design, particularly as it relates to processor design, an instruction set architecture (ISA) specification may have a number of different possible hardware implementations, and those implementations may be referred to as microarchitectures. Typically, processor designers are free to implement an ISA with the hardware and/or firmware of their choosing, as long as that implementation meets the ISA specifications.

Some ISA specifications provide for a base set of instructions to be implemented, and further provide for one or more optional sets of instructions, referred to as "extensions" to be added to the implementation of the base instruction set by processor designers.

RISC-V is an example of an ISA specification that provides for processor designers to, for example, add instructions to the base ISA for implementation in the microarchitecture. Some instruction set extensions for RISC-V may be referred to as "standard" extensions, i.e., an instruction set extension that is pre-defined by the RISC-V ISA specification. The RISC-V ISA specifies a number of standard extensions, including, among others for example, extension "M" for integer multiplication and division, extension "F" for single-precision floating-point, and extension "D" for double-precision floating-point. The "F" standard extension includes several classes of single-precision floating-point instructions, namely, load and store instructions, computational instructions, conversion and move instructions, compare instructions, and classify instructions.

RISC-V also provides for the addition of one or more custom instructions, i.e., instructions not defined by the RISC-V ISA but implemented by a processor designer.

Referring again to the RISC-V "F" extension, this standard instruction-set extension for single-precision floating-point, adds single-precision floating-point computational instructions compliant with the IEEE 754-2008 arithmetic standard (ANSI/IEEE Std 754-2008, IEEE standard for floating-point arithmetic, 2008). The single-precision floating-point number format of the IEEE 754-2008 standard requires 23 fraction bits F, 8 exponent bits E, and a sign bit S, with a total of 32 bits for each word. F is the mantissa in 2's complement positive binary fraction represented from bit 0 to bit 22 of the 32-bit single-precision floating-point number (see FIG. 2 for the IEEE 754-2008 single-precision floating-point number format).

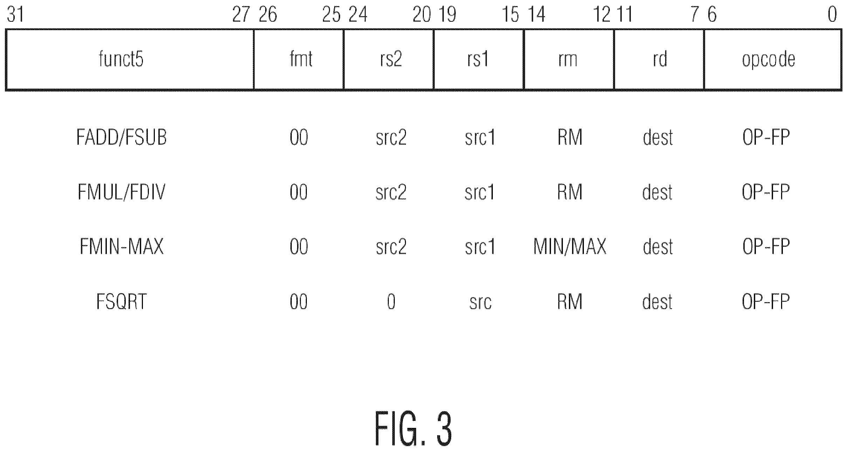

The RISC-V "F" extension also defines a set of floating-point instructions. FIG. 3 illustrates the 32-bit format of the "F" extension floating-point computational instructions. As shown in FIG. 3, bits 0-6 contain a 7-bit opcode, bits 7-11 contain a 5-bit destination register address, bits 12-14 contain a 3-bit field specifying which rounding method to use, bits 15-19 contain a 5-bit first source register address, bits 20-24 contain a 5-bit second source register address, bits 25-26 contain a 2-bit field specifying an instruction format (00 indicates a single-precision floating point operation), and bits 27-31 contain a 5-bit field specifying a particular type of single-precision floating-point computational operation.

It is noted that the principles of the present disclosure may be used with RISC-V floating-point instructions other than single-precision floating-point computational instructions. By way of example and not limitation, the principles of the present disclosure may be used with RISC-V "D" extension double-precision floating-point computational instructions, or the "Q" extension quad-precision computational instructions. And it is further noted that the principles disclosed here may be applied to floating-point units in non-RISC-V architectures, including but not limited to ARM, PowerPC, and so on.

Although the standard RISC-V instruction encoding scheme is designed to support ISA extensions with variable-length instructions, the base RISC-V ISA has fixed-length 32-bit instructions that must be naturally aligned on 32-bit boundaries. Various illustrative embodiments described herein use fixed-length 32-bit instructions, however, embodiments of this disclosure are not limited to the fixed-length 32-bit instruction format. By way of example and not limitation, various embodiments in accordance with this disclosure may be implemented for RISC-V's variable-length instructions where each instruction may be any number of 16-bit instruction parcels (with parcels aligned on 16-bit boundaries).

It is noted that the name "RISC-V" represents the fifth major reduced instruction set computer (RISC) instruction set architecture (ISA) from the University of California at Berkeley. See, for example, "The RISC-V Instruction Set Manual, Volume I: User-Level ISA, Document Version 20191213," Editors Andrew Waterman and Krste Asanovic, RISC-V Foundation, December 2019; and "The RISC-V Instruction Set Manual, Volume II: Privileged Architecture, Document Version 20211203," Editors Andrew Waterman, Krste Asanovic, and John Hauser, RISC-V International, December 2021.

Various aspects of this disclosure are described more fully herein with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of, or combined with any other aspect of the disclosure. For example, an apparatus may be implemented, or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of this disclosure may be embodied by one or more elements of a claim.

As described in greater detail below, some embodiments in accordance with this disclosure may implement a custom instruction by adding control circuitry to a RISC-V "F" extension compliant FPU such that the added control circuitry redirects the "F" extension FPU hardware to participate in the execution of the custom instruction. It is noted that various embodiments are not limited to the RISC-V ISA, nor are they limited to RISC-V floating-point implementations. That is, embodiments in accordance with this disclosure may also be implemented in non-RISC-V processors.

Transcendental functions, such as the exponential function ($e$^x), are needed for non-linear arithmetic operations in processors. Exponential functions have some mathematically interesting and unique features. For example, exponential functions are unique because the derivative of an exponential function of a real variable is directly proportional to the function's value. That is, given the exponential function $f(x) = e$^x, the derivative of $f(x)$ is $f'(x) = (e$^x$) (ln\ e),$ which equals $e$^x since $ln\ e$ equals 1 (where $e$ is the base of the natural logarithms, x is a real number, and $ln$ is the natural logarithm).

Some conventional approaches for computing an estimate of an exponential function ($e$^x) have used lookup table storage circuits that are not memory efficient. Such conventional approaches may also have significant error from true or reference values, and may further have instruction latency that reduces computational efficiency.

Various embodiments in accordance with this disclosure implement hardware support for the execution of a floating-point exponent function instruction in a processor having an FPU. Some embodiments implement hardware support for the execution of a custom floating-point exponent function instruction in a RISC-V processor that includes the "F" extension for single-precision floating-point instructions.

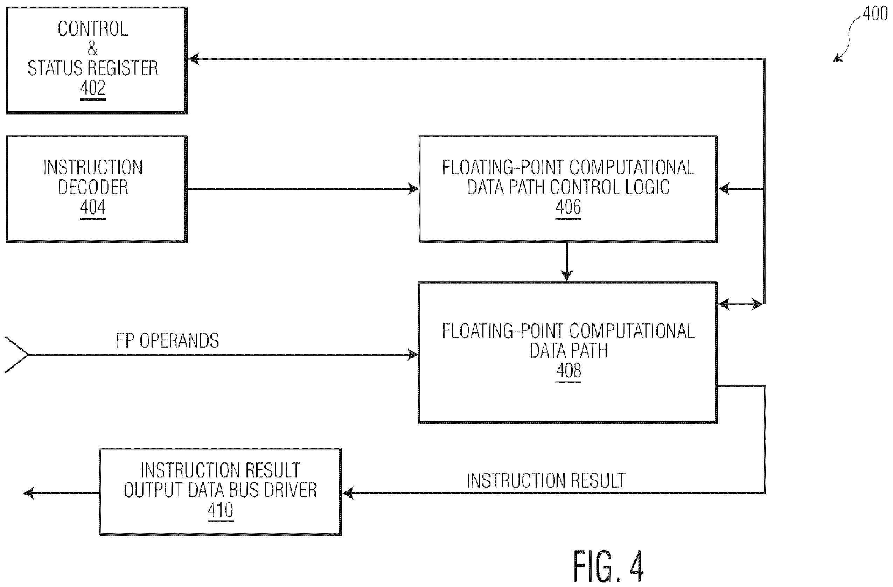

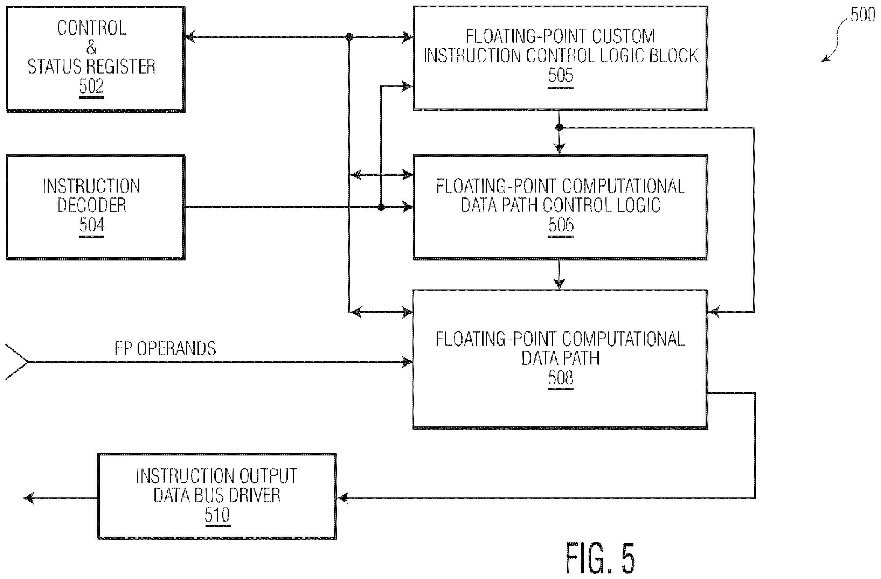

FIGs. 4 and 5 are block diagrams illustrating simplified FPUs for the purpose of introducing the concept of adding, or inserting, additional control logic into an FPU design in order to execute a custom instruction by a series of actions including, but not limited to, directing the FPU to execute instructions which were not received and decoded from the processor's instruction stream.

FIG. 4 is a high-level block diagram of a simplified FPU **400.** FPU **400** is integrated in a processor (not shown) and includes a control and status register (CSR) **402,** an instruction decoder **404,** a floating-point computational data path control logic block **406,** a floating-point computational data path **408,** and an instruction result output data bus driver **410.** CSR **402** is coupled to floating-point computational data path control logic block **406,** and floating-point computational data path **408.** Instruction decoder **404** is coupled to floating-point computational data path control logic block **406,** which is coupled to floating-point computational data path **408.** Floating-point computational data path **408** is coupled to instruction result output data bus driver **410.**

It will be understood by those skilled in the art that "floating-point computational data path" refers to the physical implementation, typically logic circuitry, that receives various operands and control signals, and processes those operands to produce results in accordance with specified logical rules.

FIG. 5 is a high-level block diagram of a simplified FPU **500** integrated in a processor (not shown). In this illustrative example, FPU **500** is RISC-V "F" extension compliant and further includes a control logic block for implementing a floating-point exponential function in accordance with this disclosure. FPU **500** includes a control and status register (CSR) **502,** an instruction decoder **504,** a floating-point custom instruction control logic block **505,** a floating-point computational data path control logic block **506,** a floating-point computational data path **508,** and an instruction output data bus driver **510.** In this illustrative embodiment, floating-point custom instruction control logic block **505** provides floating-point exponential function control logic. CSR **502** is coupled to floating-point custom instruction control logic block **505,** floating-point computational data path control logic block **506,** and floating-point computational data path **508.** Instruction decoder **504** is coupled to floating-point custom instruction control logic block **505,** and to floating-point computational data path control logic block **506** Floating-point custom instruction control logic block **505** is coupled to floating-point computational data path control logic block **506,** and to floating-point computational data path **508.** Floating-point computational data path control logic block **506** is coupled to floating-point computational data path **508.** Floating-point computational data path **508** is coupled to instruction output data bus driver **510.**

Still referring to FIG. 5, floating-point computational data path control logic block **506** and floating-point computational data path **508** operate so as to execute to the 32-bit single-precision floating-point instructions specified by the RISC-V "F" extension. In some embodiments, the decoding of a custom instruction, such as for example, the decoding of the custom floating-point exponent instruction (FEXP(x)) by instruction decoder **504,** starts a series of actions controlled by floating-point custom instruction control logic block **505.** During the course of this series of actions, floating-point custom instruction control logic block **505** may, among other things, direct floating-point computational data path **508** to execute one or more RISC-V "F" extension instructions without having received such instructions from the stream of instructions fetched by the processor.

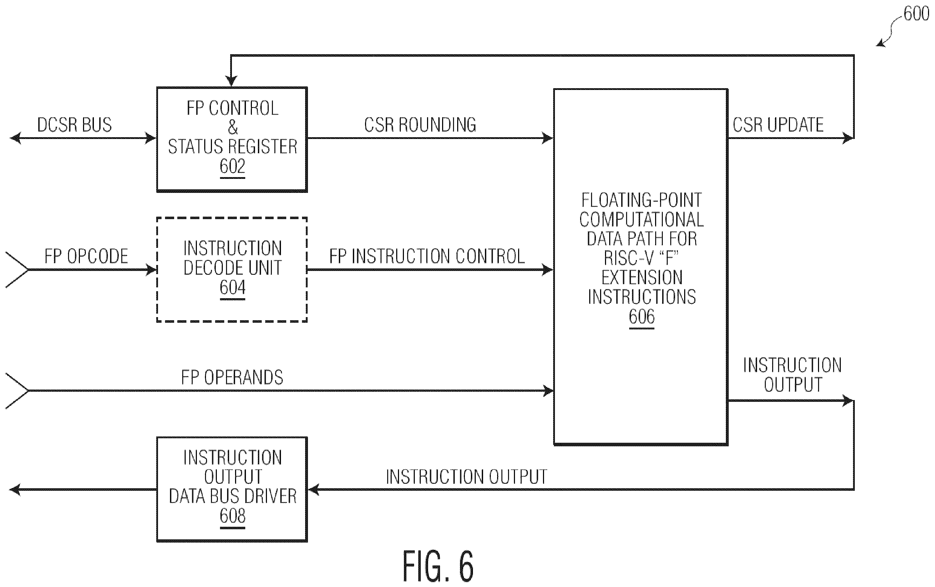

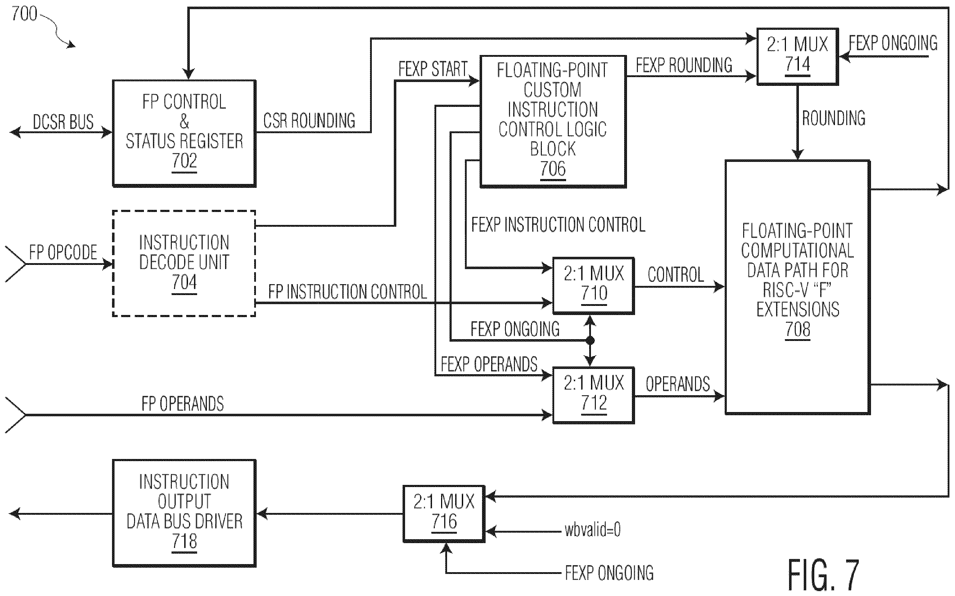

FIGs. 6 and 7 are high-level block diagrams illustrating simplified FPUs compliant with the RISC-V "F" extension, and which are integrated within respective processors (not shown). FIG. 7 shows additional control logic blocks compared to FIG. 6, where that additional control circuitry implements the functionality of a custom floating-point instruction not found the RISC-V "F" extension. The processors referred to in connection with FIGs. 6 and 7 may be scalar or super-scalar. Likewise, the processors may be single-core or multi-core implementations.

FIG. 6 is a high-level block diagram of a portion of a floating-point unit **600** for executing floating-instructions in accordance with the "F" extension of the RISC-V instruction set architecture. In this illustrative example, FPU **600** includes a floating-point control and status register (FCSR) **602,** an instruction decode unit **604,** a floating-point computational data path **606,** and an instruction output data bus driver **608.** As indicated in FIG. 6, control information from instruction decode unit **604** is provided to floating-point data path **606,** which also receives floating-point operands from elsewhere in the processor, for example from one or more registers in which those operands may be temporarily stored. Upon completing the execution of a floating-point instruction, the results may be transferred from floating-point computational data path **606** to instruction output data bus driver **608.** Instruction output data bus driver **608** may transfer the results via a write-back to the appropriate destination, such as a destination register.

FIG. 7 is a high-level block diagram of a portion of a floating-point unit **700** for executing floating-instructions of the RISC-V "F" extension, with the addition of logic for executing a custom floating-point exponent function instruction in accordance with this disclosure. FPU **700** includes a floating-point control and status (FCSR) **702,** an instruction decode unit **704,** a floating-point custom instruction control logic block **706,** a floating-point computational data path **708,** a first multiplexor (mux) **710,** a second mux **712,** a third mux **714,** a fourth mux **716,** and an instruction output data bus driver **718.** In this illustrative embodiment, floating-point custom instruction control logic block **706** is used to implement a custom instruction that computes the exponential function, and includes at least one look-up table (LUT). In this illustrative embodiment, first mux **710,** second mux **712,** third mux **714,** and fourth mux **716** are each 2:1 muxes. In this illustrative embodiment, muxes **710, 712,** and **714** allow floating-point custom instruction control logic block **706** to take over control of floating-point computational data path **708** to assist with the execution of the FEXP instruction.

Floating-point computational data path **708** is configured to receive instruction control information from first mux **710,** floating-point operands from mux **712,** and rounding control information from third mux **714.** Floating-point computational data path **708** is configured to execute the floating-point instructions of the RISC-V "F" extension. Floating-point computational data path **708** is further configured to provide information to FCSR **702** and to provide the results of instruction execution to fourth mux **716.**

Still referring to FIG. 7, first mux **710** is coupled to receive floating-point instruction control information from instruction decode unit **704** at a first one of its data inputs. First mux **710** is coupled to receive floating-point exponential instruction control information from floating-point custom instruction control logic block **706,** at a second one of its data inputs. First mux **710** is coupled to receive, at its select input, a select control signal (fexp_ongoing) from floating-point custom instruction control logic block **706.** First mux **710** provides, at its output, floating-point instruction control information from instruction decode unit **704** while fexp_ongoing is deasserted, and provides, at its output, floating-point exponential (FEXP) instruction control information while fexp_ongoing is asserted.

Second mux **712** is coupled to receive floating-point operands at a first one of its data inputs. Second mux **712** is coupled to receive FEXP operands at a second one of its data inputs. Second mux **712** is coupled to receive fexp_ongoing at its select input from floating-point custom instruction control logic block **706.** Second mux **712** provides, at its output, floating-point operands while fexp_ongoing is deasserted, and provides, at its output, FEXP operands while fexp_ongoing is asserted.

Third mux **714** is coupled to receive, at a first one of its data inputs, CSR rounding control information from FCSR **702.** Third mux **714** is coupled to receive FEXP rounding control information at a second one of its data inputs from floating-point custom instruction control logic block **706.** Third mux **714** is coupled to receive fexp_ongoing at its select input from floating-point custom instruction control logic block **706.** Third mux **714** provides, at its output, CSR rounding control information while fexp_ongoing is deasserted, and provides, at its output, FEXP rounding control information while fexp_ongoing is asserted.

Fourth mux **716** is coupled to receive, at a first one of its data inputs, instruction results from floating-point computational data path **708.** Fourth mux **716** is coupled to receive a write-back-invalid signal at a second one of its data inputs. Fourth mux **716** is coupled to receive fexp_ongoing at its select input from floating-point custom instruction control logic block **706.** Fourth mux **716** provides, at its output, instruction results from floating-point computational data path **708** while fexp_ongoing is deasserted, and provides, at its output, the write-back-invalid signal while fexp_ongoing is asserted. The write-back-invalid signal indicates to instruction output data bus driver **718** that valid instruction results are not available while execution of the custom FEXP instruction is ongoing.

As noted above, various embodiments, in accordance with this disclosure, provide hardware support, typically implemented in a processor, for efficiently computing the exponential function using floating-point computational hardware. Still other embodiments provide methods of operating the floating-point computational hardware to accomplish the task of computing the exponential function.

As described in greater detail below, various embodiments may combine the functionality of floating-point computational hardware that implements functionality defined by the RISC-V ISA with the functionality of floating-point computational hardware that implements custom instructions in accordance with this disclosure.

Some embodiments, in accordance with this disclosure, may use the functionality of at least a subset of RISC-V's "F" Standard Extension for Single-Precision Floating-Point in combination with hardware support for implementing custom instructions to allow the efficient computation of the exponential function. It is noted that in the RISC-V "F" Extension, floating-point arithmetic instructions with one or two source operands use the R-type format with the OP-FP major opcode (see "The RISC-V Instruction Set Manual, Volume I: User-Level ISA, Document Version 20191213"). In some embodiments, the processor hardware for implementing the "F" Extension floating-point instructions FMUL, FCVT.W.S, FCVT.S.W, FNMSUB, and FMADD, in combination with control logic for implementing one or more custom instructions in accordance with this disclosure, may be operated to perform the computation of the exponential function.

FMUL.S performs single-precision floating-point multiplication between *rs1* and *rs2,* and writes the result to *rd.*

FCVT is a single-precision floating-point conversion instruction. RISC-V floating-point-to-integer and integer-to-floating point conversion instructions are encoded in the OP-FP major opcode space. FCVT.W.S converts a floating-point number in floating-point register *rs1* to a signed 32-bit integer in integer register *rd.* FCVT.S.W converts a 32-bit signed integer, in integer register *rs1* into a floating-point number in floating-point register *rd.* All floating-point to integer and integer to floating-point conversion instructions round according to the *rm* field of the instruction.

FNMSUB is a fused multiply-add single-precision floating-point instruction, that specifies three source registers (*rs1, rs2,* and *rs3*) and a destination register *rd.* The execution of FNMSUB computes -*rs1* x *rs2* + *rs3* and writes the result to *rd.*

FMADD is a fused multiply-add single-precision floating-point instruction, that specifies three source registers (*rs1, rs2,* and *rs3*) and a destination register *rd.* The execution of FMADD computes *rs1* x *rs2* + *rs3* and writes the result to *rd.*

In various embodiments, control logic for the custom FEXP instruction in accordance with this disclosure, operates cooperatively with floating-point circuitry for implementing the RISC-V standard "F" extension. The following mathematical properties may be used in some embodiments that implement a processor for performing a floating-point exponential computation:

$$e^{\wedge}(x+y) = (e^{\wedge}x)\,(e^{\wedge}y) \qquad \text{(Eq. 1)}$$

$$e^{\wedge}(\mathrm{x}ln2) = e^{\wedge}(ln2^{\wedge}\mathrm{x}) = 2^{\wedge}\mathrm{x} \quad (\text{Eq. 2})$$

**In** some embodiments, an instruction decode unit determines that the custom FEXP instruction is to be executed, and asserts a signal, FEXP_start. The FEXP instruction control logic block responds to the assertion of the FEXP_start signal by initiating an FEXP_execution_sequence, which is a sequence of actions by both the FEXP instruction control logic block and by the floating-point computational data path in order to compute the exponential function. In this illustrative embodiment, FEXP instruction control logic block has a pre-computed value of 1/*ln2* stored therein. In this way, a division in the hardware implementation may be avoided by replacing a division, i.e., 1/*ln2,* with multiplication by the pre-computed constant (1/*ln2*). In this illustrative example, the constant 1/*ln2* may be represented as 32'h3FB8AA3B.

After initiating the FEXP_execution_sequence, e^x is treated as e^(I*/n2+F) where I is an integer and fraction F is the residue of the equation (0<=F<*ln2*). Also, after initiating the FEXP_execution_sequence, the FEXP instruction control logic block switches the select inputs of one or more multiplexers so that floating-point instruction control signals, which originate from the instruction decode unit, are bypassed, and FEXP instruction control signals are provided to the floating-point computational data path by the FEXP instruction control logic block.

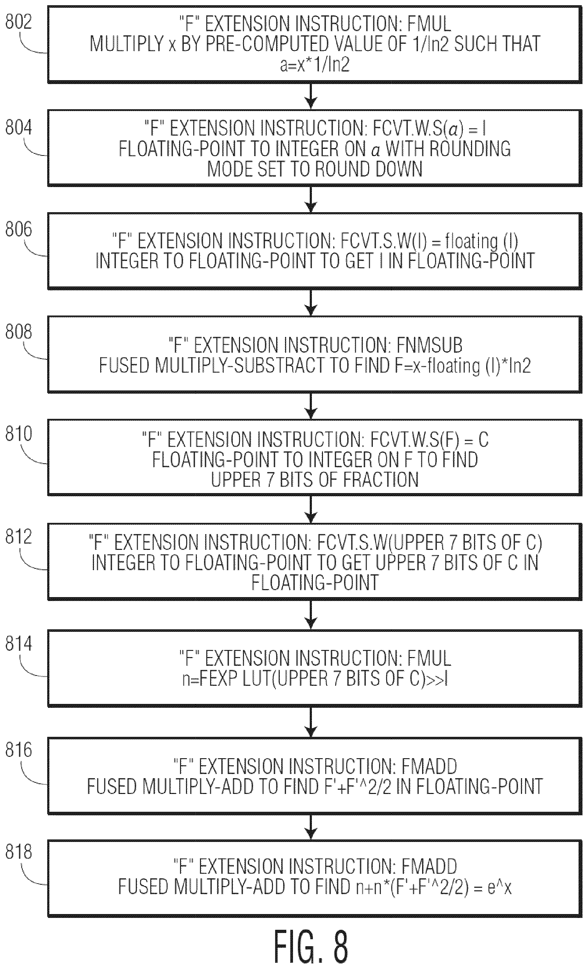

Referring to FIG. 8, in a first operation **802,** the floating-point custom instruction control logic block directs that a floating-point multiplication (FMUL) be performed by the floating-point computational data path, such that *a=x*1/ln2*, where the pre-computed value of 1/*ln2* is supplied to the floating-point computational data path by the floating-point custom instruction control logic block.

In a second operation **804,** *a* is separated into an integer part (I), and a fraction part (F). To accomplish this separation, the floating-point custom instruction control logic block directs the floating-point computational data path to perform a floating-point to integer conversion (FCVT.W.S(*a*)=I) on the value *a* with rounding mode set to rounding down (towards -∞).

In a third operation **806,** I is converted to floating-point form. To accomplish this, the floating-point custom instruction control logic block directs the floating-point computational data path to perform an integer to floating-point conversion on the value I (FCVT.S.W(I)).

In a fourth operation **808,** F is determined by computing x-float(I)*/n2. To accomplish this, floating-point custom instruction control logic block directs the floating-point computational data path to perform a fused multiply subtract (FNMSUB).

As noted above, e^x is treated as e^(I*/n2+F) where I is an integer and fraction F is the residue of the equation (0<=F<*ln2*). Using the property of Eq. (1) above, it can be seen that e^(I*/n2+F) may also be represented as e^(I*/n2)*e^(F). And, using the property of Eq. (2) above, it can be seen that:

$$e^{\wedge}(\mathrm{I}^{*}ln2)^{*}\mathrm{e}^{\wedge}(\mathrm{F}) = e^{\wedge}(ln2^{\wedge}\mathrm{I})^{*}(e^{\wedge}\mathrm{F}) = (2^{\wedge}\mathrm{I})^{*}(e^{\wedge}\mathrm{F})$$

It is noted that F in single-precision floating-point representation has 23 bits, i.e., bits 0 through 22 of the 32-bit single-precision floating-point number, and with the first argument reduction given above 0<=F<*ln2.* Thus:

$$(2^{\wedge}\mathrm{I})^{*}(e^{\wedge}\mathrm{F}) = (2^{\wedge}\mathrm{I})^{*}(e^{\wedge}(.\mathrm{b}22\mathrm{b}21\mathrm{b}20....\mathrm{b}1\mathrm{b}0))$$

A table-based method may be used to further reduce the argument range to 0<=F<ln2/128. The FEXP instruction control logic block is configured to use the fractional part to look up e^x of the first four bits (0 to 0.1111)(LUT16), and in parallel look up e^x of the following three bits (LUT8), effectively a table with entries for e^x of 0 to 0.0000111.

To get the first upper 7 bits of F a fifth operation **810** and a sixth operation **812** are performed. In the fifth operation **810,** the floating-point custom instruction control logic block directs the floating-point computational data path to perform a floating-point to integer conversion on F to calculate the upper 7 bits of the fraction (FCVT.W.S(F)=C). And in the sixth operation **812,** the floating-point custom instruction control logic block directs the floating-point computational data path to perform an integer to floating-point conversion (FCVT.S.W(upper 7 bits of C) to get the upper 7 bits of C in floating-point format.

Thus, e^x = (2^I)*(e^(.b22b21b20.......b1b0)) = (2^I)*(e^ (.b22b21b20b19+.0000b18b17b16+.0000000b15b14........b1b0)). And, e^x = (2^I)*(e^ (.b22b21b20b19+.0000b18b17b16+.0000000b15b14... .....b1b0)) = (2^I)*(e^(.b22b21b20b19)*e^(0000b18b17b16) *e^(.0000000b15b14........b1b0)). And, (2^I)*lut16*lut8*e^(.0000000b15b14........b1b0)). It is noted that .0000000b15b14........b1b0 lies in the range of 0 to ln2/128 since 0<F<*ln2*. Now since F' is between 0 to *ln2*/128, the power series for e^x converges very well with 1 + F'+ (F'^2)/2 (Order 3 only). So, e^x = 2^I*lut16*lut8*e^ (.0000000b15b14........b1b0)) = 2^I*lut16*lut8*(1+F'+(F'^2)/2) where F' is .0000000b15b14 ........b1b0. Letting n=(lut16*lut8), with n>>I, then e^x = n + n*(F'+(F'^2)/2). It is noted that n=FEXP LUT(Upper 7 bits of C), that is, the FEXP instruction control logic block accesses the contents of lut16 and lut 8 based on the upper 7 bits of C.

In seventh operation **814,** the floating-point custom instruction control logic block, which includes look-up tables, provides the values, i.e., the operands, from the look-up tables to enable a single-cycle floating-point multiply (FMUL) to get n=(lut16*lut8), with n>>I.

In an eighth operation **816,** the floating-point custom instruction control logic block directs the floating-point computational data path to perform a fused multiply-add instruction (FMADD) to get F'+(F'^2)/2 in floating-point format.

In a ninth operation **818,** the floating-point custom instruction control logic block directs the floating-point computational data path to perform a fused multiply-add instruction (FMADD) to get (n + n*(F'+(F'^2)/2) in floating-point format.

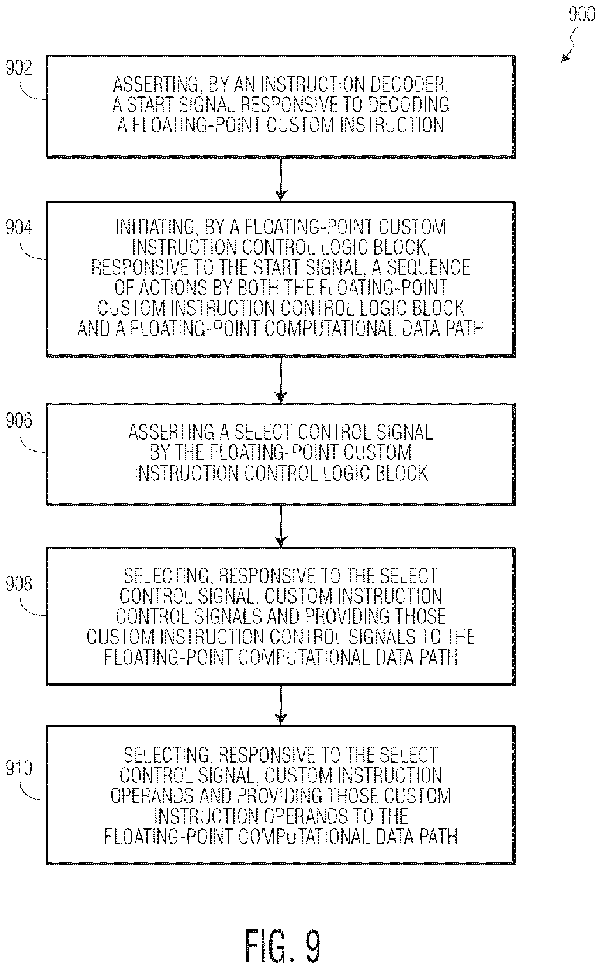

Referring to FIG. 9, an illustrative method **900** in accordance with the present disclosure is shown. Method **900** includes asserting **902,** by an instruction decoder, a start signal responsive to decoding a floating-point custom instruction, and initiating **904,** by a floating-point custom instruction control logic block, responsive to the start signal, a sequence of actions by both the floating-point custom instruction control logic block and a floating-point computational data path. Method **900** further includes asserting **906** a select control signal by the floating-point custom instruction control logic block. Method **900** continues with selecting **908,** responsive to the select control signal, custom instruction control signals, and providing the custom instruction control signals to the floating-point computational data path, and selecting **910,** responsive to the select control signal, custom instruction operands and providing the custom instruction operands to the floating-point computational data path. In some embodiments, the floating-point custom instruction is a floating-point exponent instruction, and the floating-point custom instruction control logic block is a floating-point exponent instruction control logic block that is configured to direct the floating-point computational data path to support the floating-point exponent instruction control logic block in executing the floating-point exponent instruction.

The foregoing disclosure provides illustration and description, but is not intended to be exhaustive or to limit the aspects to the precise form disclosed. Modifications and variations may be made in view of the above disclosure or may be acquired from practice of the aspects.

Unless stated otherwise, terms such as "first" and "second" are used to arbitrarily distinguish between the elements such terms describe. Thus, these terms are not necessarily intended to indicate temporal or other prioritization of such elements.

It should be readily understood that the meaning of "on," "above," and "over" in the present disclosure should be interpreted in the broadest manner such that "on" not only means "directly on" something but also includes the meaning of "on" something with an intermediate feature or a layer therebetween, and that "above" or "over" not only means the meaning of "above" or "over" something but can also include the meaning it is "above" or "over" something with no intermediate feature or layer therebetween (i.e., directly on something).

Further, spatially relative terms, such as "beneath," "below," "lower," "above," "upper," and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (e.g., rotated 90 degrees or at other orientations) and the spatially relative descriptors used herein may likewise be interpreted accordingly.

As used herein, the term "vertical/vertically" means nominally orthogonal to the surface of the object being referenced.

As used herein, the term "nominal/nominally" refers to a desired, or target, value of a characteristic or parameter for a component or a process operation, set during the design phase of a product or a process, together with a range of values above and/or below the desired value. The range of values can be due to slight variations in manufacturing processes or tolerances.

As used herein, the term "about" indicates the value of a given quantity may vary from its nominal value based on, for example, various manufacturing tolerances. By way of example, and not limitation, the term "about" may indicate the cited value of a given quantity may vary within, for example, 1-30% of the value (e.g., $\pm0.5\%$, $\pm1\%$, $\pm5\%$, $\pm10\%$, $\pm20\%$, or $\pm30\%$ of the value). Specific ranges are provided herein when needed.

It should be appreciated by those skilled in the art that any block diagrams herein represent conceptual views of illustrative hardware embodying the principles of the aspects.

While each of the embodiments are described above in terms of their structural arrangements, it should be appreciated that the aspects also cover the associated methods of using the embodiments described above.

The foregoing disclosure provides illustration and description, but is not intended to be exhaustive or to limit the aspects to the precise form disclosed. Modifications and variations may be made in light of the above disclosure or may be acquired from practice of the aspects.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. A phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items, and may be used interchangeably with "one or more." Furthermore, as used herein, the terms "set" and "group" are intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," and/or the like are intended to be open-ended terms. Further, the phrase "based on" is intended to mean "based, at least in part, on" unless explicitly stated otherwise.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be affected while remaining within scope of the invention, as defined by the claims.

## Claims

1.  A processor, comprising:

    an instruction decoder configured to provide at least floating-point instruction control signals;
    a floating-point computational data path;
    a floating-point custom instruction control logic block coupled to the floating-point computational data path;
    a control and status register coupled to the floating-point computational data path, and the floating-point custom instruction control logic block;
    a first multiplexor configured to provide either floating-point instruction control signals or custom instruction control signals to the floating-point computational data path based on the state of a select control signal; and
    a second multiplexor configured to provide either floating-point operands or custom operands to the floating-point computational data path based on the state of the select control signal.

2.  The processor of claim 1, further comprising:
    a third multiplexor configured to provide either first rounding control information or custom rounding control information to the floating-point computational data path based on the state of the select control signal.

3.  The processor of claim 2, wherein the third multiplexor is coupled to receive the first rounding control information from a control and status register, and is further coupled to receive the custom rounding control information from the floating-point custom instruction control logic block.

4.  The processor of any preceding claim, wherein the floating-point custom instruction control logic block includes at least one look-up table.

5.  The processor of any preceding claim, further comprising an instruction output data bus driver that is coupled to receive instruction output results from the floating-point computational data path while the select signal is deasserted.

6.  The processor of any preceding claim, wherein the instruction decoder is configured to determine whether a custom instruction has been received.

7.  The processor of claim 6, wherein the instruction decoder is configured to assert a start signal responsive to the determination that a custom instruction has been received.

8.  The processor of claim 7, wherein the floating-point custom instruction control logic block is configured to initiate, responsive to the start signal, a sequence of actions by both the floating-point custom control logic block and by the floating-point computational data path.

9.  The processor of any preceding claim, wherein the instruction decoder is configured to determine whether a floating-point exponent instruction has been received.

10. The processor of claim 9, wherein the floating-point custom instruction control logic is configured to control the execution of a floating-point exponent instruction.

11. A method, comprising:

asserting, by an instruction decoder, a start signal responsive to decoding a floating-point custom instruction;
initiating, by a floating-point custom instruction control logic block, responsive to the start signal, a sequence of actions by both the floating-point custom instruction control logic block and a floating-point computational data path;
asserting a select control signal by the floating-point custom instruction control logic block;
selecting, responsive to the select control signal, custom instruction control signals, and providing the custom instruction control signals to the floating-point computational data path; and
selecting, responsive to the select control signal, custom instruction operands and providing the custom instruction operands to the floating-point computational data path.

12. The method of claim 11, further comprising:
accessing, by the custom instruction control logic block, one or more look-up tables.

13. The method of claim 11 or 12, further comprising:
selecting, responsive to the select control signal, custom rounding control information and providing the custom rounding control information to the floating-point computational data path.

14. The method of any of claims 11 to 13, further comprising:
inhibiting write back of instruction execution results while the select signal is asserted.

15. The method of any of claims 11 to 14, further comprising:
deasserting the select control signal subsequent to execution of the custom floating-point instruction.

102

INSTRUCTION FETCH & DECODE UNIT
104

106

INTEGER REGISTERS
&
INTEGER ALU
108

FLOATING-POINT REGISTERS
&
FLOATING-POINT ALU
110

FIG. 1

FIG. 2

| 31          27 | 26   25 | 24    20 | 19    15 | 14    12 | 11   7 | 6        0 |
|----------------|---------|----------|----------|----------|--------|------------|
| funct5         | fmt     | rs2      | rs1      | rm       | rd     | opcode     |

| | | | | | | |
|---|---|---|---|---|---|---|
| FADD/FSUB | 00 | src2 | src1 | RM | dest | OP-FP |
| FMUL/FDIV | 00 | src2 | src1 | RM | dest | OP-FP |
| FMIN-MAX | 00 | src2 | src1 | MIN/MAX | dest | OP-FP |
| FSQRT | 00 | 0 | src | RM | dest | OP-FP |

# FIG. 3

EP 4 617 862 A1

FIG. 4

EP 4 617 862 A1

EP 4 617 862 A1

```
                                                                    ⌐500
┌─────────────────────┐          ┌──────────────────────────────────┐
│      CONTROL         │          │      FLOATING-POINT CUSTOM        │
│        &             │◄────────►│ INSTRUCTION CONTROL LOGIC BLOCK   │
│  STATUS REGISTER     │          │              505                  │
│       502            │          └──────────────────────────────────┘
└─────────────────────┘                          │
                                                 ▼
┌─────────────────────┐          ┌──────────────────────────────────┐
│    INSTRUCTION       │◄────────►│   FLOATING-POINT COMPUTATIONAL    │
│     DECODER          │          │    DATA PATH CONTROL LOGIC        │
│       504            │          │              506                  │
└─────────────────────┘          └──────────────────────────────────┘
                                                 │
                                                 ▼
                                  ┌──────────────────────────────────┐
              FP OPERANDS         │   FLOATING-POINT COMPUTATIONAL    │
        ───────────────────────► │          DATA PATH                │
                                  │              508                  │
                                  └──────────────────────────────────┘
                                                 │
┌─────────────────────┐                          │
│ INSTRUCTION OUTPUT   │◄─────────────────────────┘
│  DATA BUS DRIVER     │
│       510            │
└─────────────────────┘
```

FIG. 5

FIG. 6

EP 4 617 862 A1

FIG. 7

802 "F" EXTENSION INSTRUCTION: FMUL
MULTIPLY x BY PRE-COMPUTED VALUE OF 1/ln2 SUCH THAT
$a=x*1/\ln2$

804 "F" EXTENSION INSTRUCTION: FCVT.W.S($a$) = I
FLOATING-POINT TO INTEGER ON $a$ WITH ROUNDING
MODE SET TO ROUND DOWN

806 "F" EXTENSION INSTRUCTION: FCVT.S.W(I) = floating (I)
INTEGER TO FLOATING-POINT TO GET I IN FLOATING-POINT

808 "F" EXTENSION INSTRUCTION: FNMSUB
FUSED MULTIPLY-SUBSTRACT TO FIND F=x-floating (I)*ln2

810 "F" EXTENSION INSTRUCTION: FCVT.W.S(F) = C
FLOATING-POINT TO INTEGER ON F TO FIND
UPPER 7 BITS OF FRACTION

812 "F" EXTENSION INSTRUCTION: FCVT.S.W(UPPER 7 BITS OF C)
INTEGER TO FLOATING-POINT TO GET UPPER 7 BITS OF C IN
FLOATING-POINT

814 "F" EXTENSION INSTRUCTION: FMUL
n=FEXP LUT(UPPER 7 BITS OF C)>>I

816 "F" EXTENSION INSTRUCTION: FMADD
FUSED MULTIPLY-ADD TO FIND F'+F'^2/2 IN FLOATING-POINT

818 "F" EXTENSION INSTRUCTION: FMADD
FUSED MULTIPLY-ADD TO FIND n+n*(F'+F'^2/2) = e^x

FIG. 8

900

902 ASSERTING, BY AN INSTRUCTION DECODER,
A START SIGNAL RESPONSIVE TO DECODING
A FLOATING-POINT CUSTOM INSTRUCTION

904 INITIATING, BY A FLOATING-POINT CUSTOM
INSTRUCTION CONTROL LOGIC BLOCK,
RESPONSIVE TO THE START SIGNAL, A SEQUENCE
OF ACTIONS BY BOTH THE FLOATING-POINT
CUSTOM INSTRUCTION CONTROL LOGIC BLOCK
AND A FLOATING-POINT COMPUTATIONAL DATA PATH

906 ASSERTING A SELECT CONTROL SIGNAL
BY THE FLOATING-POINT CUSTOM
INSTRUCTION CONTROL LOGIC BLOCK

908 SELECTING, RESPONSIVE TO THE SELECT
CONTROL SIGNAL, CUSTOM INSTRUCTION
CONTROL SIGNALS AND PROVIDING THOSE
CUSTOM INSTRUCTION CONTROL SIGNALS TO THE
FLOATING-POINT COMPUTATIONAL DATA PATH

910 SELECTING, RESPONSIVE TO THE SELECT
CONTROL SIGNAL, CUSTOM INSTRUCTION
OPERANDS AND PROVIDING THOSE CUSTOM
INSTRUCTION OPERANDS TO THE
FLOATING-POINT COMPUTATIONAL DATA PATH

FIG. 9

Europäisches
Patentamt

European
Patent Office

Office européen
des brevets

# EUROPEAN SEARCH REPORT

**Application Number**

EP 25 15 5912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2010/023568 A1 (HICKEY MARK J [US] ET AL) 28 January 2010 (2010-01-28) * paragraphs [0059], [0070], [0072], [0075], [0076] * ----- | 1-15 | INV. G06F9/30 G06F7/60 |
| A | SUGANDHA TIWARI ET AL: "PERI: A Posit Enabled RISC-V Core", ARXIV.ORG, CORNELL UNIVERSITY LIBRARY, 201 OLIN LIBRARY CORNELL UNIVERSITY ITHACA, NY 14853, 5 August 2019 (2019-08-05), XP081455660, * the whole document * ----- | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 24 July 2025 | Gratia, Romain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 5912

This annex lists the patent family members relating to the patent documents cited in  the above-mentioned European search report.
The members are as contained in the European Patent Office EDP file on
The European Patent Office is in no way liable for these particulars which are merely given for the purpose of information.

24-07-2025

| Patent document cited in search report | Publication date | Patent family member(s) | | Publication date |
|---|---|---|---|---|
| US 2010023568 A1 | 28-01-2010 | JP | 5431044 B2 | 05-03-2014 |
| | | JP | 2010027049 A | 04-02-2010 |
| | | KR | 20100010473 A | 01-02-2010 |
| | | US | 2010023568 A1 | 28-01-2010 |
| | | US | 2013191432 A1 | 25-07-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- User-Level ISA. The RISC-V Instruction Set Manual. RISC-V Foundation, December 2019, vol. I
- Privileged Architecture. The RISC-V Instruction Set Manual. RISC-V International, December 2021, vol. II

- User-Level ISA. The RISC-V Instruction Set Manual, vol. I